# EUROPÄISCHE PATENTANMELDUNG

(11) **EP 0 780 945 A1**
(43) Veröffentlichungstag der Anmeldung: **25.06.1997**
(21) Anmeldenummer: 96118435.5
(22) Anmeldetag: 18.11.1996
(51) Int. Cl.: H02G 3/12

(54) **Zylindrischer Montageeinsatz**

(30) Priorität: 30.11.1995 DE 29519010 U
(71) Anmelder: Spicker, Hugo, Dipl.-Ing., D-42697 Solingen (DE)
(72) Erfinder: Spicker, Hugo, Dipl.-Ing., D-42697 Solingen (DE)

(57) **Zusammenfassung**

Zylindrischer Montageeinsatz (1) zum Einstecken in ein Wandloch (8) mit mindestens zwei außen angeordneten und mit einer Komponente (40) entgegen der Einstckrichtung (7) widerhakenartig abstehenden elastischen Borsten (9), die in Einsteckrichtung (7) hintereinander gestattet und mit geringem Abstand benachbart sind und die beim Einstecken in das Wandloch (8) radial zur Wand (2) des Montageeinsatzes (1) gedrückt werden, dadurch gekennzeichnet, daß die Borsten (9) auch in Umfangsrichtung (11) gestaffelt sind, derart, daß unter Berücksichtigung der Elastizität des Borstenmaterials die einsteckendig (5) voranstehenden Borsten (9) durch die radiale Zusammendrückung beim Einstecken des Montageeinstazes (1) in das Wandloch (8), ohne sich gegenseitig zu behindern, neben die einsteckendig (5) nachfolgenden Borsten (9) zur Wand (2) des Montageeinstatzes (1) gedrückt werden.

## Beschreibung

Die vorliegende Erfindung betrifft einen zylindrischen Montageeinsatz nach Oberbegriff von Anspruch 1.

Derartiger Montageeinsatz ist z.B. bekannt aus EU 88 112 689.

Obwohl aus dieser Veröffentlichung derartiger Montageeinsatz nur in der Verwendung als elektrische Installationsdose bekannt ist, soll dies keine Einschränkung der Erfindung auf derartige Installationsdosen sein. Die vorliegende Erfindung betrifft daher Montageeinsätze für Wände, insbesondere Dübel, Maueranker, Installationsdosen, Verteilerdosen, Wandauslaßdosen.

Bei den bekannten Montageeinsätzen werden zunächst Wandlöcher mit vorgegebenem Nenndurchmesser in das Mauerwerk gebohrt. Beim Einstecken des Montageeinsatzes in das so erzeugte Wandloch werden die zunächst abstehenden elastischen Borsten durch die Lochwandung radial zusammengedrückt um anschließend mit vorbestimmter Vorspannung in der Lochwandung anzuliegen. Dabei verkrallen sich die widerhakenartigen Borsten im Mauerwerk der Lochwandung und verhindern auf diese Weise das Herausziehen des Montageeinsatzes.

Zusätzlich kann vorgesehen sein, entsprechend der eingegangs genannten EU 88 112 689, die widerhakenartig abstehenden Borsten mit einer Spanneinrichtung zu verbinden, mit welcher die Borsten, - sobald sie im Mauerwerk verkrallt sind -, entgegen der Einsteckrichtung axial gespannt werden.

Das grundsätzliche Problem derartiger Montageeinsätze im Mauerwerk besteht daher in der richtigen Bemessung der Haltekräfte. Da diese Haltekräfte möglichst hoch sein sollten, sind daher möglichst viele Borsten vorzusehen. Da allerdings durch die Borstenvielzahl auch eine erhebliche Verteuerung des Herstellungsprozesses erfolgt, wird man bestrebt sein nur soviele Halteborsten wie nötig vorzusehen.

Andererseits bestimmen auch die Materialparameter die erzielbaren Haltekräfte in erheblichem Maße. Insbesondere sind die elastischen Vorspannkräfte, mit denen die Borsten gegen die Lochwandung des Mauerwerks gedrückt werden, von erheblicher Auswirkung für die erzielbaren Haltekräfte.

Ein weiteres Problem bei der Installation derartiger Montageelnsätze tritt dann auf, wenn man berücksichtigt, daß der Mauerputz häufig mit Preßluft gespritzt wird. Die dabei auftretenden Druck- und Strömungskräfte hintergreifen den eingebrachten Montageeinsatz derart, daß sie versuchen, den Montageeinsatz auszutreiben.

Von daher ist bereits eine Untergrenze für die erforderlichen Haltekräfte zwischen Montageeinsatz und Mauerwerk einzuhalten.

Bei der Hohlwandmontage tritt ein zusätzliches Problem auf, weil die nur gering übermaßigen Lochdurchmesser bei Hohlwänden die Verwendung der bekannten Montageeinsätze für Mauerwerk ausschließen. Es sind bislang noch keine Lösungen zur sicheren Befestigung derartiger Montageeinsätze sowohl in Hohlwänden als auch im Mauerwerk bekannt geworden.

Während also nach der gestellten Aufgabe diese Montageeinsätze sowohl zur Hohlwandmontage also auch zur Lochmontage im Mauerwerk geeignet sein sollen, ist sicherzustellen, daß trotzdem möglichst hohe Haltekräfte den Montageeinsatz im Mauerwerk halten, und zwar ohne daß die Herstellungskosten, insbesondere die Werkzeugkosten übermäßig hoch werden.

Diese Aufgabe wird gelöst durch die Merkmale der Ansprüche 1 und 3. Dank dieser Merkmale wird erreicht, daß derartige Montageeinsätze sowohl zur Hohlwandmontage als auch zur Montage im massiven Mauerwerk geeignet sind. Dies wird dadurch erreicht, daß die Borsten, welche den Montageeinsatz im massiven Mauerwerk verankern, sich beim Einstecken des Montageeinsatzes in eng bemaßte Lochdurchmesser von Hohlwänden so nahe an die Außenkontur des Montageeinsatzes anschmiegen können, daß der Montageeinsatz samt seiner für massives Mauerwerk notwendigen Borsten auch durch die engen Löcher bei Hohlwandmontage hindurchdrückbar ist.

Aus der Erfindung ergibt sich für den Fall der Montage im Mauerwerk der weitere Vorteil, daß unabhängig von der Differenz zwischen Lochdurchmesser im Mauerwerk und Außendurchmesser des Montageeinsatzes eine stets hinreichend genaue Zentrierung des Montageeinsatzes im Mauerwerk erfolgt. Die Erfindung ermöglicht eine dicht gestaffelte Borstenreihe, die ohne negativen Einfluß auf die Zentrierung des Montageeinsatzes im Mauerwerk ist. Auf diese Weise werden die Haltekräfte im Mauerwerk proportional zur Anzahl der angesetzten Borsten erhöht.

Dieser Vorteil wird dadurch erreicht, daß sich alle Borsten strahlenartig, jedoch im wesentlichen parallel nebeneinander ausrichten können, so daß alle Borsten gleichzeitig und unter gleicher Vorspannung an der Lochwandung anliegen können. Mit dieser Erfindung können daher die nebeneinanderliegenden Borsten stets unabhängig voneinander mit ihren Borstenspitzen an der Lochwandung des Mauerwerks gestützt anliegen.

Wesentlich ist, daß die Borsten weitgehend unabhängig von dem Durchmesser des Wandlochs im Mauerwerk anliegen. Insbesondere ist der genaue Durchmesser des Wandlochs bei massivem Mauerwerk nicht relevant. Die elastische Vorspannung der Borsten reicht aus, um die für Installationsdosen eingebürgerten Lochdurchmesser von 82 mm ausfüllen zu können.

Zwar wird grundsätzlich eine möglichst hohe Vorspannung der Borsten angestrebt, dies jedoch in Verbindung mit der Forderung, daß nur soviel Verformung der Borsten zugelassen sein soll, daß sich die Borstenspitzen zumindest gerade eben noch im Mauerwerk verkrallen.

Die Lösung der gestellten Aufgabe beruht auf zwei voneinander getrennten Prinzipien, die beide neben der Möglichkein der Montage im Mauerwerk zusätzlich die Montage an Hohlwänden ermöglichen und die sich gegenseitig nicht ausschliessen.

Das erste Lösungsprinzip sieht vor, die Borsten zusätzlich zur Staffelung in Einsteckrichtung auch in der Umfangsrichtung zu staffeln. Die Staffelabstände in Umfangsrichung dem jeweils benachbarten Borsten sollen dabei zumindest so groß sein, daß die radial angedrückten Borsten sich seitlich neben die benachbarten Borsten legen. Daher kann im Rahmen vonliegender Erfindung auch vorgesehen sein, daß sich eine einsteckendig voranstehende Borste zunächst auf die einsteckendig nachfolgende Borste auflegt und im Zuge weiterer Zusammendrückung seitlich von dieser abrutscht, um sich neben die einsteckendig nachfolgende Borste zu legen. Deshalb eignet sich derartiger Montageeinsatz insbesondere auch zur Hohlwandmontage, weil die angelegten Borsten beim Einstecken in das relativ eng bemessene Loch der Hohlwand nicht im Weg sind. Das gegenseitige Abrutschen der Borsten bedingt unter anderem, - will man genaue geometrische Verhältnisse angeben -, daß Außenkontur der Borsten, Reibbeiwerte des Borstenmaterials, genaue geometrische Anordnung der Borsten relativ zueinander angegeben werden. Ggf. lassen sich die idealen Parameter durch einfachen Versuch ermitteln.

Das andere Lösungsprinzip beruht darauf, daß die Borsten auch mit einer Komponente in Umfangsrichtung vom Einsteckzylinder abstehen. Werden bei dieser Lösungsvariante die Borstenspitzen im Falle einer Hohlwandmontage durch das Loch in der Hohlwand in Richtung zum Montageeinsatz gedrückt, erfolgt auch hier ein Nebeneinanderlegen aufeinanderfolgender Borsten im Sinne vorliegender Erfindung.

Darüber hinaus ist eine Weiterbildung möglich, bei der die Borsten nicht nur auch in Umfangsrichtung gestaffelt sind sondern zusätzlich auch mit einer Komponente in Umfangsrichtung vom Montageeinsatz abstehen.

Insbesondere sieht jedoch diejenige Variante, bei der die Borsten lediglich auch in Umfangsrichtung gestaffelt sind, vor, daß die Borsten entlang unterschiedlicher Zylindermantellinien gerade verlaufen und in Umfangsrichtung wenigstens um eine halbe Borstendicke voneinander beabstandet sind, vorzugsweise eine ganze Borstendicke oder mehr.

Will man die Möglichkeit schaffen, den eingebauten Montageeinsatz zusätzlich in Einsteckrichtung festzuspannen, wird vorgeschlagen, die Borsten auf einem Borstenschlitten anzuordnen, der längs einer Geradführung am Montageeinsatz entgegen der Einsteckrichtung verspannbar ist. Bei dieser Weiterbildung wird der Borstenschlitten nach Einbringen des Montageeinsatzes zum wandaußenseitigen Rand verspannt. Die dabei elastisch von innen gegen die Lochwandung im Mauerwerk anliegenden Borsten graben sich ins Material der Wandung ein und geben dem Montageeinsatz daher sichersten Halt, sogar unter Vorspannung. Bei Hohlwandmontage hintergreifen die Borsten die Hohlwand von hinten und stützen sich auf dieser ab.

Vorteilhaft ist es für diese Weiterbildung, wenn als Spannvorrichtung eine Spannschraube vorgesehen ist. Damit läßt sich das Maß der axialen Verspannung zwischen Schlittenführung und Mauerwerk bzw. Hohlwand feinfühlig genau dosieren und insbesondere können die Borstenschlitten symmetrisch an dem Montageeinsatz angebracht sein um Verkanten zu vermeiden.

Im Hinblick auf die Verwendung des Montageeinsatzes als Installationsdose für elektrische Hausinstallation wird zusätzlich vorgeschlagen, den Nenndurchmesser der Spannschraube kleiner oder gleich dem Kerndurchmesser eines 3,2 mm Gewindes vorzusehen.

Dieser Weiterbildung entsprechend Anspruch 6 kommt besonderes Augenmerk zu: derartige Montageeinsätze sind hinsichtlich der Befestigungsmöglichkeiten für Schaltergehäuse etc. VDE genormt. Hierfür sind am Montageeinsatz Längsbohrungen vorgesehen, die einer 3,2 mm Schraube den notwendigen Halt geben. Derartige Schrauben haben einen Kerndurchmesser von etwa 2,8 mm. Schrauben deren Nenndurchmesser kleiner als 2,8 mm ist, laufen deshalb in diesen Längsbohrungen frei drehbar. Damit kann das zur Befestigung eines Gehäuseschalters od.dgl. vorgesehene Schraubenloch auch zum Verspannen des Borstenschlittens verwendet werden.

Die Merkmale des Anspruchs 7 erhalten darüber hinaus nicht nur den Vorteil universeller Verwendung des Montageeinsatzes bei Mauerwerksmontage als auch bei Hohlwandmontage, sondern stabilisieren derartige Montageeinsätze bei Hohlwandmontage zusätzlich. Bei dieser Weiterbildung kann sich nämlich die Einzelborste unmittelbar hinter der Rückseite der Hohlwand andrücken und abstützen, wenn, - wie im Falle von Hohlwänden üblich -, ein Mauerwerk zum Einkrallen der Borsten nicht vorgesehen ist. Dennoch wird das Einstecken des Montageeinsatzes in die Hohlwand nicht behindert, weil sich dabei die Borsten für das Mauerwerk flach an den Montageeinsatz legen können.

Die Aufspreizung der Einzelborste nach Anspruch 7 erfolgt vorteilhaft mit den Merkmalen des Anspruchs 8, da hiermit abhängig von der Einschraubtiefe der Spannschraube im Borstenschlitten eine genau vorhersagbare radiale Aufspreizung der Einzelborste erfolgt.

Auch hier wird vorgeschlagen, die Einzelborsten zur Vermeidung unnötiger Verkantung symmetrisch oder in gleichmäßigen Winkelabständen am Montageeinsatz vorzusehen (Anspruch 9).

Will man weiterhin genaue Zentrierung des Montageeinsatzes erreichen, wird vorgeschlagen, jeweils mindestens zwei Borstenreihen bezüglich der Längsachse des Borstenschlittens symmetrisch anzuordnen.

Ein unsymmetrisches seitliches Ausweichen des Montageeinsatzes beim Einstecken in das Wandloch wird daher unterbleiben.

Zusätzlich können mehrere Schlittenführungen am Umfang des Montageeinsatzes vorgesehen sein, die jedoch nicht stets alle zur Anwendung kommen müssen. Insbesondere bei Kombination mehrerer derartiger Montageeinsätze zu Schalterbatterien ermöglichen diese Merkmale höhere Flexibilität und weitergehende Kombinationsmöglichkeiten.

Sieht man zusätzlich vor, die Schlittenführungen auch mit Einsteckverbindern belegen zu können, zur Verbindung von weiteren Montageeinsätzen untereinander, werden die Kombinationsmöglichkeiten dieser Montageeinsätze überproportional verbessert. Hierfür werden Ausführungsbeispiele angegeben. Ein weiteres Problem derartiger Montageeinsätze insbesondere im Bereich elektrischer Installation sind die VDE-seitig vorgegebenen Hauptabmessungen.

Um für die Hohlwandmontage angesichts der Abstützfläche zwischen Montageeinsatz und Wandaußenseite über die VDE-seitig vorgegebenen Hauptabmessungen hinaus zusätzliche Verbesserung zu schaffen, wird vorgeschlagen, daß der Montageeinsatz einen umlaufenden Rand aufweist, der am Umfang zumindest stückweise zur Wandseite abgewinkelt verläuft. Damit bildet der Montageeinsatz im Randbereich den Querschnitt eines U, von denen der eine Längsschenkel sich bis tief innerhalb des Wandlochs erstreckt, während der andere Längsschenkel auf der Wandaußenseite aufliegt. Um nun beim Verspannen des Montageeinsatzes ein Aufspreizen des abgewinkelten Bereichs, der auf der Wandseite aufliegt, zu erzielen, soll der abgewinkelte Bereich mit der eingeschlossenen Wand zwischen Zylinderwandung des Montageeinsatzes und der Wandaußenseite einen Winkel von kleiner als 90° bilden. Auf diese Weise wird erreicht, daß sich der abgewinkelte Rand beim Verspannen der Borsten entgegen der Einsteckrichtung pilzförmig aufspreizt und auf die außenseitige Wand auflegt.

Im folgenden wird die Erfindung anhand von Ausführungsbeispielen näher erläutert. Es zeigen:
- Fig.1 bis 5: verschiedene Beispiele mit Staffelung der Borsten in Umfangsrichtung, Ausrichtung mit einer Komponente in Umfangsrichtung, Mischformen,
- Fig.6: Montagebeispiel für Mauerwerks bzw. Hohlwandmontage,
- Fig.6a: Detailansicht für Hohlwandmontage vor Axialverspannung,
- Fig.6b: Detailansicht für Hohlwandmontage nach Axialverspannung,
- Fig.7: die Abwicklung eines Montageeinsatzes,
- Fig.7b: Ansicht des Montageeinsatzes von unten mit Einsteckverbinder,
- Fig.7c: Ansicht des Montageeinsatzes von unten mit Borstenschlitten und symmetrischen Borsten,
- Fig.8a,8b: Detailansicht mit Einsteckverbindern an Schlittenführungen mit unterschiedlich langen Aufweitungskeilen,
- Fig.9: Kombination aus mehreren Montageeinsätzen insbesondere zur elektrischen Installation,
- Fig.10: Einsteckverbinder mit Einsteckklips von unten, und
- Fig.11a,11b: Detailansichten Borstenschlitten mit Einrastklammern, lösbar durch Längsschraube.

Sofern im folgenden nichts anderes gesagt ist, gilt die folgende Beschreibung stets für alle Figuren.

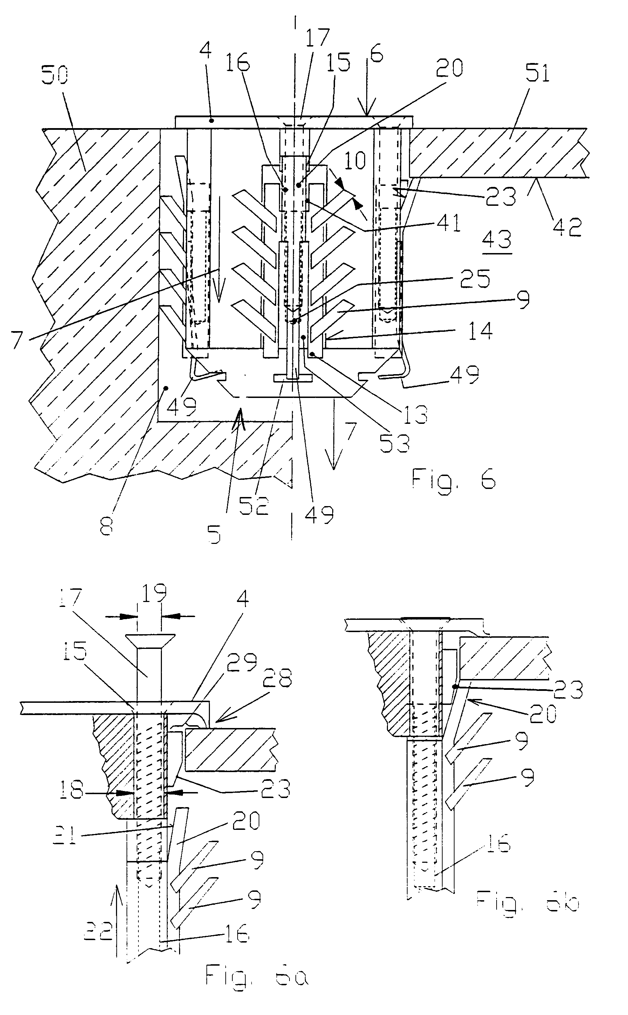

Die Figuren zeigen einen zylindrischen Montageeinsatz 1 zum Einstecken in ein Wandloch 8. Das Wandloch ist entweder eine Ausnehmung im Mauerwerk oder ein Durchbruch einer Hohlwand. Derartiger Montageeinsatz besteht grundsätzlich aus einem hohlzylindrischen Körper mit einer umfangsmäßigen Außenwand 2 und einem einsteckseitigen Boden 3. Am anderen Ende weist der zylindrische Körper den geringfügig überstehenden Rand 4 auf. Das Einsteckende 5 des Montageeinsatzes 1 liegt also dort, wo der Boden 3 angeordnet ist. Das gegenüberliegende wandauswärtsweisende Ende 6 wird hier durch den umlaufenden Rand 4 verstärkt. An der Außenwand 2 des Montageeinsatzes 1 sind mindestens zwei mit einer Komponente entgegen der Einsteckrichtung 7 widerhakenartig abstehende elastische Borsten 9 vorgesehen, die in Einsteckrichtung 7 hintereinander gestaffelt sind. Die Borsten 9 sind mit geringen Abständen zueinander benachbart, die Abstände können dabei unterhalb der gesamten wirksamen Borstenlänge liegen, um möglichst viele derartige Borsten auf dem Umfang des Montageeinsatzes 1 anbringen zu können. Man kann sich nun vorstellen, daß die gezeigten Borsten beim Einstecken des Montageeinsatzes 1 in ein Wandloch 8 (siehe Fig.6), radial zur Wand 2 des Montageeinsatzes 1 gedrückt werden. Im unbelasteten Zustand enden die Borsten 9 mit ihren Spitzen mit Abstand von der Außenwand 2 des Montageeinsatzes 1. Dies heißt, daß die Einhüllende, welche die Borstenspitzen miteinander verbindet, einen größeren Abstand von der Außenwand 2 des Montageeinsatzes 1 einnimmt, als der Außendurchmesser des Randes 4 die Außenwand 2 des Montageeinsatzes 1 überragt.

Dies liegt einerseits darin begründet, daß sich die abstehenden Borsten 9 mit ihren Spitzen unter strammer Vorspannung in den Wandrillen eines Lochs im Mauerwerk einkrallen sollen, während andererseits die einsteckendige Unterseite des Randes 4 im Falle der Verwendung des Montageeinsatzes 1 bei Hohlwandmontage möglichst flach auf der Außenseite der Hohlwand aufliegen soll, also einen definierten Außenanschlag des Montageeinsatzes 1 an der Hohlwand bilden soll.

Es besteht daher einerseits die Forderung, daß die Borsten 9 beim Einstecken des Montageeinsatzes 1 in das Loch eines Mauerwerkes mit hinreichend großer radialer Vorspannung an der Lochwandung anliegen sollen, während sich die Borsten 9 bei Verwendung des Montageeinsatzes zur Hohlwandmontage so dicht an die Außenwand 2 des Montageeinsatzes 1 anschmiegen sollen, daß sie das Durchstecken des Montageeinsatzes durch das enge Loch in der Hohlwand nicht behindern.

Um zu erreichen, daß die Borsten 9 behinderungsfrei bei Hohlwandmontage ausweichen und trotzdem eine geeignete Befestigung bei Mauerwerksmontage sind, werden die Borsten gemäß der nachfolgenden Beschreibung auf der Außenwand 2 des Montageeinsatzes 1 angeordnet:

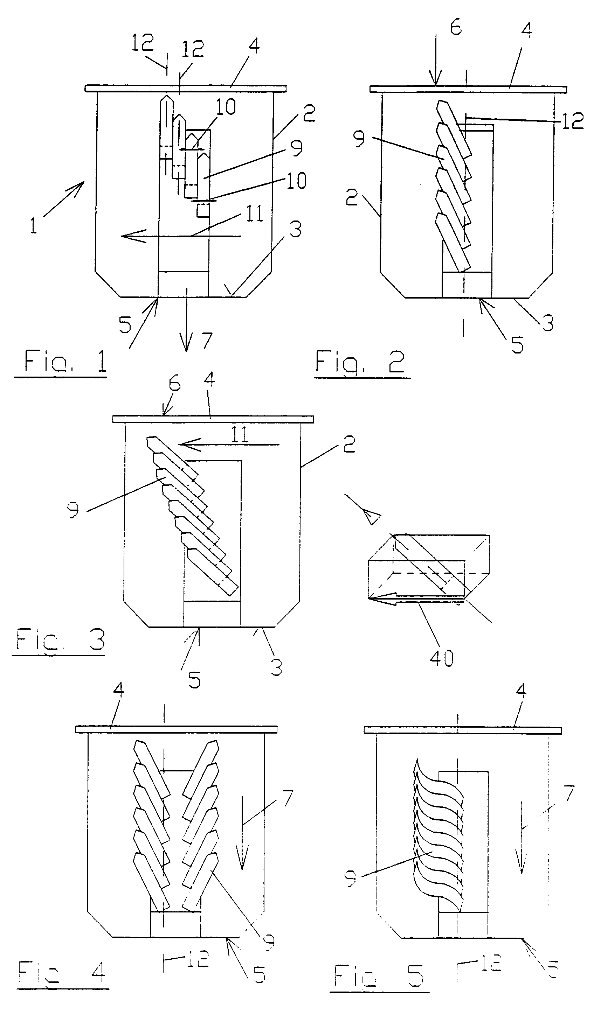

Die folgende Beschreibung gilt insbesondere den Fig.1 und 3. Hier ist vorgesehen, daß die Borsten 9 neben ihrer Staffelung in Einsteckrichtung 7 auch in Umfangsrichtung 11 gestaffelt sind.

Es erfolgt daher bei diesen Ausführungsbeispielen eine Anbringung der Borstenfüße jeder einzelnen Borste 9 derart, daß die Verbindungslinie der Borstenfüße nach Art einer Schraubenlinie um den zylindrischen Montageeinsatz 1 herum verläuft. Dabei soll allerdings ausdrücklich gesagt sein, daß die Borsten auch jede andere Anordnung einnehmen können, insbesondere auch willkürlich oder regelmäßig oder unregelmäßig verteilt sein können.

Insbesondere Fig.1 zeigt eine Weiterbildung, bei welcher die Borsten 9 im Hinblick auf ihre Staffelung in Umfangsrichtung entlang unterschiedlicher Zylindermantellinien 12 gerade verlaufen. Um bei dieser Ausführung ein einwandfreies Nebeneinanderlegen der Borsten 9 zu ermöglichen, sollen die benachbarten Borsten 9 um wenigstens eine halbe Borstendicke in Umfangsrichtung voneinander beabstandet sein. Gezeigt ist ein Fall, bei welchem die Borsten in Umfangsrichtung um eine ganze Borstendicke 10 voneinander beabstandet sind. In diesem Falle unterbleibt beim Einstecken des Montageeinsatzes 1 in das enge Wandloch 8 der Hohlwand (siehe Fig.6) ein Auflegen der einsteckendig voranstehenden Borsten auf die einsteckendig nachfolgenden Borsten in jedem Fall. Alle Borsten werden praktisch berührungsfrei nebeneinander zur Wand 2 des Montageeinsatzes gedrückt. Einen anderen Fall zeigt Fig.3. Dort ist zusätzlich die Staffelung der Borsten auch in Umfangsrichtung 11 vorgesehen, so daß die Borsten auch mit einer Komponente 40 in Umrangsrichtung 11 abstehen.

Darüber hinaus zeigen Fig.2 und 4,5 Ausführungsbeispiele, bei welcher die Borsten 9 lediglich auch mit einer Komponente 40 in Umfangsrichtung 11 abstehen. Bei diesen Ausführungsbeispielen ist daher ohne Beschränkung der Erfindung hierauf, keine Staffelung der Borsten 9 in Umfangsrichtung 11 vorgesehen. Alle Borsten liegen hier auf einer durchgehenden Zylindermantellinie 12. Auf dieser Zylindermantellinie 12 sind die Borstenfüße aller einzelnen Borsten angeordnet. Die Borstenspitzen erstrecken sich, ausgehend von dieser Zylindermantellinie einerseits in der Einsteckrichtung 7 und darüber hinaus auch in der Umfangsrichtung 11. Vor der weiteren Beschreibung der Fig.6 bis 11 soll zunächst einmal die Wirkungsweise der Borstenanordnung nach den Fig.1 bis 5 erläutert werden.

Wie man anhand von Fig.6 erkennt, dient derartiger Montageeinsatz 1 einerseits zum Einstecken in ein Wandloch 8 des Mauerwerks 50. Der Durchmesser des Wandlochs 8 ist größer als der Außendurchmesser des Montageeinsatzes 1. Der Durchmesser des Wandlochs beträgt für Installationsdosen z.B. 82 mm. Die Borstenspitzen liegen auf einen Kreis vom Durchmesser z.B. 90 mm. Folglich werden die Borsten 9 beim Einstecken des Montageeinsatzes 1 in das Wandloch 8 gegen die Außenwand 2 des Montageeinsatzes gedrückt.

Andererseits dient derartiger Montageeinsatz auch zum Einstecken in eine Hohlwand, wie im rechten Teil der Fig.6 gezeigt ist. Beim Einstecken in eine Hohlwand sind die für Mauerwerksmontage erforderlichen Borsten 9 im Prinzip sogar hinderlich. Dies ist darauf zurückzuführen, daß der Einsteckdurchmesser bei Hohlwänden nur geringfügig größer als der Außendurchmesser der Außenwand 2 des Montageeinsatzes 1 ist, damit der Montageeinsatz mit dem schmalen Rand 4 auf der Aussenwand der Hohlwand aufliegen kann.

Daher müssen bei Verwendung derartigen Montageeinsatzes für Hohlwandmontage die Borsten 9 soweit zur Außenwand 2 des Montageeinsatzes gedrückt werden können, daß diese Borsten keine Behinderung beim Einstecken des Montageeinsatzes 1 bedeuten. Beim Einstecken werden daher die in Einsteckrichtung 7 voranstehenden Borsten an die Außenwand 2 gedrückt, während die in Einsteckrichtung dahinterfolgenden Borsten noch keinen Kontakt zur Wandung des Durchstecklochs 8 in der Hohlwand 43 haben müssen. Dabei können die voranstehenden Borsten soweit angedrückt werden, bis sie mit den benachbarten oder einsteckendig nachfolgenden Borsten in Kontakt geraten. In diesem Moment sollen die voranstehenden Borsten seitlich neben die nachfolgenden Borsten gedrückt und in dieser Stellung auch gehalten werden. Es ist daher der umfangsmäßige Versatz bzw. die Komponente 40 in Umfangsrichtung 11 so zu bestimmen, daß die voranstehenden Borsten beim Einstecken des Montageeinsatzes in das Wandloch 8 seitlich neben die einsteckendig nachfolgenden Borsten zur Wand 2 des Montageeinsatzes 1 gedrückt werden. Hierdurch läßt sich der Montageeinsatz 1 in das relativ eng bemessene Loch der Hohlwand 43 eindrücken, so daß der Montageeinsatz 1 anschließend mit der Unterseite seines Randes 4 auf der Außenseite der Hohlwand 43 aufliegen kann.

Zur Bemessung des richtigen umfangsmäßigen Versatzes bzw. der Umfangskomponente sind daher insbesondere die Elastizität des Borstenmaterials, die Außenkontur des Borstenmaterials sowie die Querschnittsabmessungen der einzelnen Borsten im Hinblick auf deren Festigkeit zu berücksichtigen. Es empfiehlt sich, die Borsten im Bereich ihrer gegenseitigen Kontaktflächen so abzuschrägen, daß eine schräge Kontaktzone entsteht, auf welcher die einsteckendig voranstehenden Borsten leicht seitlich neben die einsteckendig nachfolgenden Borsten abrutschen können und sich seitlich neben die nachfolgenden Borsten legen werden.

In den Fällen der Fig.1 bis 5 sitzen die Borsten 9 jeweils auf einem nicht näher bezeichneten Halter, der in Längsrichtung in den Montageeisatz 1 eingesteckt ist. Mit dem wandauswärtsseitigen Ende liegt der Halter an einem entsprechenden Anschlag des Montageeinsatzes 1 an. Daher können derartig ausgestaltete Borsten samt ihres Halters beim Einstekken des Montageeinsatzes 1 nicht mehr in Längsrichtung verrutschen. Ggf. kann hierfür in einer Weiterbildung eine Klipspaarung vorgesehen sein, die den Halter auch entgegen der Einsteckrichtung am Montageeinsatz 1 hält.

Zusätzlich zeigt unter anderem Fig.6, daß die Borsten auf einem Borstenschlitten 13 angeordnet sind, der an dem Montageeinsatz 1 in einer Schlittenführung 14 verschieblich geführt und entgegen der Einsteckrichtung 7 in axialer Richtung verspannbar ist.

Der Borstenschlitten 13 hintergreift daher mit seinen parallel liegenden äußeren Längskanten eine entsprechende Längsausnehmung am Montageeinsatz 1. Er wirkt nach Art einer Schwalbenschwanzführung oder nach Art einer T-Nutführung mit dem Montageeinsatz 1 zusammen.

Entlang dieser gemeinsamen Führungsflächenpaarung ist der Borstenschlitten 13 relativ zum Montageeinsatz 1 verschiebbar, wobei der Borstenschlitten 13 entgegen der Einsteckrichtung 7 verspannt werden kann. Hierzu ist vorgesehen, daß der Montageeinsatz 1 einen wandauswärtsweisenden Rand 4 und dort zwei oder mehr Durchstecklöcher 15 aufweist. Durch das Durchsteckloch 15 ist eine Spannschraube 17 gesteckt worden, die im Durchsteckloch 15 frei beweglich ist. Demzufolge ist der Durchmesser des Durchstecklochs 15 größer oder höchstens gleich dem Nenndurchmesser der Spannschraube 17. Die Spannschraube 17 ist ohne gewindeartigen Eingriff in dem Durchsteckloch 15 geführt. Daher ist die Spannschraube dort frei drehbar. Am Borstenschlitten 13 ist jedoch eine Gewindebohrung 16 angebracht, die mit dem Durchsteckloch 15 fluchtet. In die Gewindebohrung 16 greift die Spannschraube 17 ein und kann daher in ihrer einen Drehrichtung den Borstenschlitten 13 in Richtung zum wandauswärtsweisenden Rand 4 des Montageeinsatzes 1 anziehen und in ihrer anderen Drehrichtung den Borstenschlitten 13 freigeben.

Hierzu stützt sich der Kopf der Spannschraube 17 auf dem wandauswärtsweisenden Rand 4 des Montageeinsatzes 1 ab, während durch die Schlittenführung 14 zugleich ein unbeabsichtigtes Mitdrehen des Borstenschlittens 13 beim Anziehen der Spannschraube 17 verhindert wird.

Berücksichtigt man nun, daß der Montageeinsatz auch in seinen Hauptabmessungen als Installationsdose für Mauerwerks- oder Hohlwandmontage von elektrischer Installation ausgebildet ist, so geben die - an sich bekannten - VDE-Richtlinien bestimmte Hauptabmessungen vor. Hierzu gehört unter anderem, daß der Rand 4 des Montageeinsatzes 1 Montagelöcher aufweist, an denen z.B. ein Steckdoseneinsatz zu befestigen ist. Die VDE-Richtlinien schreiben für den Durchmesser der Befestigungslöcher für z.B. Steckdoseneinsätze den Kerndurchmesser eines 3,2 mm Gewindes vor. Von besonderer Bedeutung ist daher die Auswahl der Spannschraube 17 derart, daß deren maximal möglicher Nenndurchmesser, also der Durchmesser der Gewindespitzen, kleiner oder gleich dem Kerndurchmesser 19 eines 3,2 mm Gewindes ist.

Zusätzlich zeigt Fig.6 mit 6a und 6b, daß wandauswärtsseitig am Borstenschlitten 13 eine Einzelborste 20 sitzt. Die Borstenspitze der Einzelborste 20 endet kurz unterhalb des Randes 4 des Montageeinsatzes 1. Die Einzelborste 20 besteht in einer wandauswärtsseitigen Verlängerung des Borstenschlittens 13 und ist von diesem über zwei seitlich angeordnete Trennschlitze 41 getrennt. Die Tiefe der Trennschlitze 41 ist so bemessen, daß der überstehende Teil der Einzelborste 20 elastisch und zerstörungsfrei soweit aufgespreizt werden kann, bis die Spitze der Einzelborste 20 auf der Rückseite 42 einer entsprechenden Hohlwand 43 anliegt. Um das Aufspreizen der Einzelborste 20 zu unterstützen, liegt die Einzelborste 20 mit ihrer Unterseite 21 gegen eine in Spannrichtung keilförmig zunehmende Führungsfläche 23 am Montageeinsatz 1 an. Wird bei dieser Anordnung die Einzelborste 20 mittels der Spannschraube 17 in Richtung zur Rückseite 42 der Hohlwand 43 gezogen, schiebt sie sich mit ihrer Unterseite 21 entlang der vorgegebenen Keilfläche und spreizt sich dabei nach außen auf. Hierdurch wird sie mit ihrer Spitze auf einen ständig zunehmenden Abstand vom Montageeinsatz 1 gezwungen, so daß sie sich beim Verspannen entgegen der Einsteckrichtung 7 radial aufspreizt.

Nach Anlage der Spitze der Einzelborste 20 an der Rückseite 42 der Blendplatte 51 der Hohlwand 43 kann daher der gesamte Montageeinsatz 1 fest gegen die Hohlwand 43 gesetzt werden. Der überstehende Rand 4 des Montageeinsatzes 1 bildet ein entsprechendes Widerlager, die Blendplatte 51 der Hohlwand 43 ist zwischen Rand 4 und Spitze der Einzelborste 20 eingeklemmt. Prinzipiell weist eine derartige Hohlwand stets eine Blendplatte z.B. aus Sperrholz, Rigips, Blech und einen dahinter liegenden Hohlraum auf. Nach dieser Erfindung können derartige Montageeinsätze an Blendplatten unterschiedlicher Dicken verwendet werden.

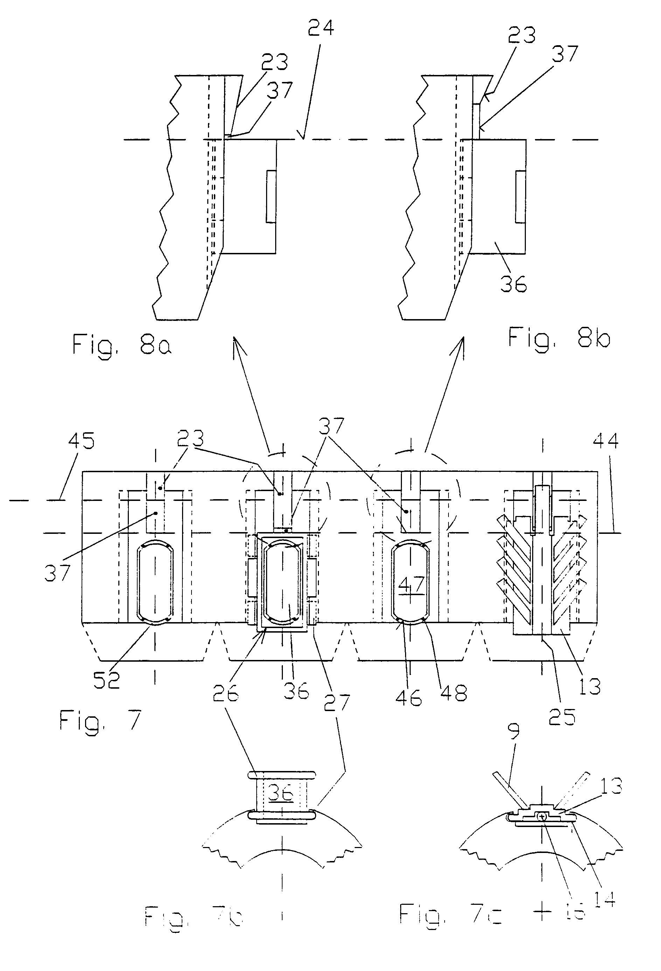

Fig.7 zeigt eine Abwicklung des Montageeinsatzes 1. Am Umfang des Montageeinsatzes 1 sitzen mehrere Aufweitungskeile 23 verteilt, die Aufweitungskeile sind um jeweils 90° zueinander beabstandet.

Der erste bzw. dritte und der zweite bzw. vierte Aufweitungskeil liegen sich bezüglich des Montageeinsatzes 1 diametral gegenüber. Dabei sind die sich paarweise gegenüberliegenden Aufweitungskeile mit ihren Keilspitzen auf jeweils derselben Randabstandslinie 44 bzw. 45 angeordnet. Jeweils ein Paar von Aufweitungskeilen endet daher auf der mit großem Abstand liegenden Linie 44 während das andere Paar auf der mit geringem Abstand liegenden Linie 45 endet.

Wie insbesondere Fig.7 zeigt, dienen die Schlittenführungen 14 auch zur Aufnahme von Einsteckverbindern 26. Jeder Einsteckverbinder 26 weist einen zur Schlittenführung 14 korrespondierenden Führungsquerschnitt auf. Jeder Einsteckverbinder 26 hintergreift mit einem Paar nach außen abstehender Finger 27 seine zugeordnete Schlittenführung 14 und jeder Einsteckverbinder ist daher fest mit dem zugeordneten Montageeinsatz 1 verbunden.

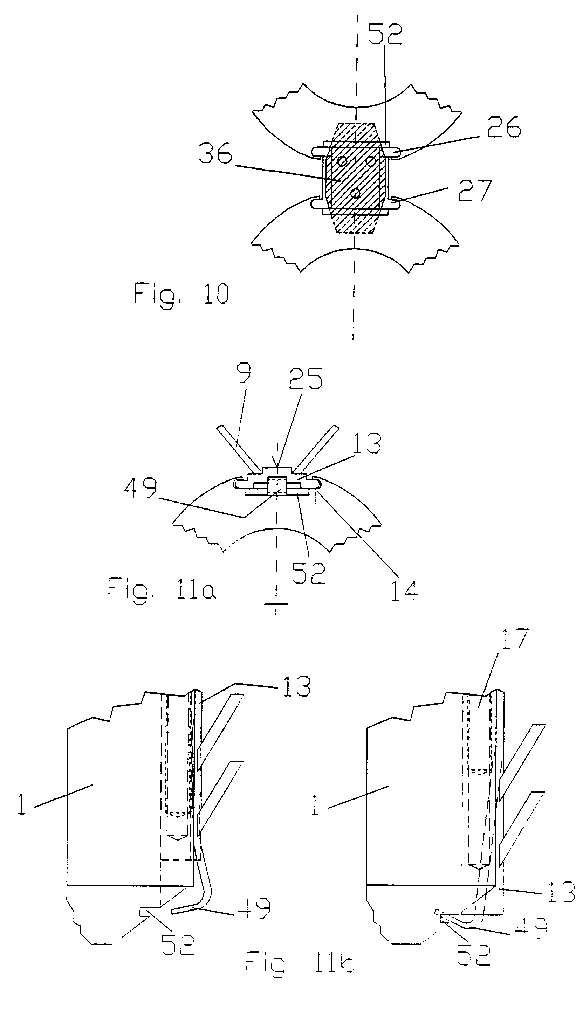

Ergänzend hierzu zeigt Fig.10, daß der Einsteckverbinder 26 auf seiner Unterseite einen angespritzten Quersteg aufweist (schraffiert gezeigt), der den Einsteckverbinder beidseits in Richtung zum jeweils benachbarten Montageeinsatz überragt.

Der Quersteg bildet eine klipsartige Einsteckbefestigung, indem die jeweils über den Einsteckverbinder hinausragenden Stegbereiche in eine längsschlitzförmige Ausnehmung 52 am Montageeinsatz 1 hineinragen.

Hierzu wird der Einsteckverbinder in die dafür vorgesehene Längsführung am Montageeinsatz hineingesteckt. Während der Einsteckverbinder in Richtung zum Rand 4 des Montageeinsatzes 1 geschoben wird, gerät der überragende Bereich des Querstegs zunehmend gegen das konisch zulaufende Ende der Bodenzone des Montageeinsatzes 1. Dabei gleitet der Quersteg mit seinen freien Enden auf der Schrägen des Bodenbereichs ab und zwar solange, bis das Ende des Quersteges in den dort vorgesehenen in Umfangsrichtung verlaufenden Schlitz des Montageeinsatzes 1 einfällt. Dabei schnappt ab vorgegebener Stellung der unter Spannung stehende überstehende Stegbereich in den Umfangsschlitz 52 am Montageeinsatz 1 und rastet auf diese Weise fest. Der Einsteckverbinder ist somit im wesentlichen starr mit dem jeweils benachbarten Montageeinsatz 1 verbunden. Von besonderem Vorteil ist die Tatsache, daß die Verbindung auch wieder lösbar ist, weil der Quersteg derart elastisch ist, daß er ein Lösen der Verbindung zwischen Einsteckverbinder und Montageeinsatz gestattet. In diesem Sinne sind auch andere Einrastverbindungen möglich, z.B. Druckknöpfe.

Der Einsteckverbinder wird gebildet aus einem rohrförmigen Teil 36 von im wesentlichen quaderförmige Grundriß sowie an Grund- und Deckfläche daran abstehenden seitlich angeordneten Fortsätzen 27, die mit den Schlittenführungen 14 im Eingriff sein sollen.

Daher kann jeder Einsteckverbinder 26 in Längsrichtung der zugeordneten Schlittenführung 14 dort eingesteckt werden und über eine ggf. vorgesehene Klemmpassung sogar gegenüber der Schlittenführung fixiert sein. Von Bedeutung ist in diesem Zusammenhang nicht nur eine Klemmpassung, sondern auch die weiter oben beschriebene elastisch einrastende Verbindung zwischen Montageeinsatz und Einsteckverbinder mittels des Quersteges eines am Einsteckverbinder elastisch angefügten Einsteckklips.

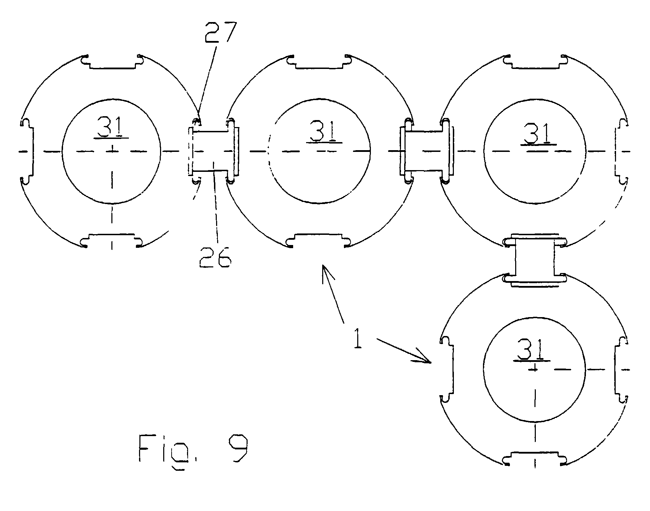

Da beim Ausführungsbeispiel gemäß Fig.7 jeweils paarweise unterschiedlich lange Aufweitungskeile 23 vorgesehen sind, sind die auf der kürzeren Randabstandslinie 45 liegenden Aufweitungskeile an ihren spitzen Enden zusätzlich mit einem verlängerten Längsanschlag 37 ausgestattet. Der verlängerte Längsanschlag 37 endet, ausgehend von der Keilspitze auf kurzem Randabstand 45 dort, wo die Keilspitzen mit langem Randabstand 44 ebenfalls enden. Auf diese Weise ist sichergestellt, daß jeder Einsteckverbinder unabhängig von der wirksamen Tiefe des Aufweitungskeils 23 gleich weit in die zugeordnete Schlittenführung 14 eingesteckt werden kann, während die Borstenschlitten darüber hinweggleiten können. Daher können mit den gezeigten Montageeinsätzen vielfältige Kombinationen erzielt werden, wie dies beispielsweise anhand von Fig.9 gezeigt ist.

Fig.9 zeigt beispielsweise eine Längskombination aus drei Montageeinsätzen 1, jeweils verbunden über Einsteckverbinder 26. Endseitig dieses Dreier-Pakets ist quer dazu ein weiterer Montageeinsatz 1 ebenfalls mittels Einsteckverbinder 26 angeschlossen. Auf diese Weise ließe sich beispielsweise eine im Grundriß entsprechende Schalter-Stecker-Anordnung im elektrischen Installationsbereich realisieren.

Um daher auch eine elektrische Verbindung der einzelnen Montageeinsätze 1 untereinander zu ermöglichen, weisen gemäß Fig.7 die Schlittenführungen 14 dort, wo die Einsteckverbinder 26 angeordnet werden können, Durchbrüche 46 auf, die von leicht aufbrechbaren Verschlußplatten 47 verdeckt sind. Jede Verschlußplatte 47 ist über Sollbruchstege 48 mit dem Rand des jeweiligen Durchbruchs 46 verbunden und kann daher im Bedarfsfall leicht ausgebrochen werden. Auf diese Weise wird in Verbindung mit dem rohrförmigen Teil 36 des Einsteckverbinders 26 eine Verlegeverbindung geschaffen, in welcher elektrische Leitungen zur Verbindung der einzelnen Montageeinsätze 1 verlegt werden können.

Darüber hinaus zeigen Fig.7b und 7c, daß die Schlittenführungen 14 sowohl zur Aufnahme der Einsteckverbinder 26 als auch zur Aufnahme der Borstenschlitten 13 geeignet sind. Lediglich die Passungen zwischen den Fortsätzen 27 und den hinterschnittenen Bereichen der Schlittenführungen 14 am Montageeinsatz 1 sind unterschiedlich. Im Falle eines Einsteckverbinders 26 soll hier eine Klemmpassung vorgesehen sein, welche den Einsteckverbinder 26 wackelfrei einklemmt und ggf. in Endstellung verriegelt, entsprechend Fig.10. Im Falle eines Borstenschlittens 13 ist hier eine Gleitführung vorzusehen, so daß der Borstenschlitten 13 ruckfrei über die Gewindebohrung 16, wie bereits erwähnt, verfahren werden kann.

Darüber hinaus zeigen Fig.6a und 6b, daß der Montageeinsatz 1 am Außenumfang seines umlaufenden Randes 4 in Richtung zur Wandseite teilweise abgewinkelt sei kann. Der abgewinkelte Bereich 28 kann sich über den gesamten Außenumfang des Randes 4 erstrecken. Um eine leichtere Anpassung zu erzielen, ist es vorteilhaft, wenn der abgewinkelte Bereich 28 nur stückweise vorgesehen ist. Der abgewinkelte Bereich 28 bildet eine Auflagezone, mit welcher der Rand 4 auf der zugeordneten Wand aufliegt. Wesentlich ist insbesondere, daß der abgewinkelte Bereich 28 mit der eingeschlossenen Wand 29 einen Winkel von 90° , vorzugsweise weniger als 90° bildet.

Mit diesen Maßnahmen ist sichergestellt, daß beim Anzug der Spannschraube 17, also wenn der Borstenschlitten 13 in Richtung zur Rückseite 42 der Hohlwand 43 gezogen wird, der zur Wand abgewinkelte Bereich 28 des Randes 4 pilzartig aufgeweitet wird und sich dabei unter Vergrößerung seiner Auflagefläche radial nach außen schiebt (siehe Fig.6b). Er bildet somit eine zusätzlich stabilisierende Auflage des Randes 4, ohne daß die durch VDE vorgeschriebenen Fertigungsabmessungen derartiger Installationsdosen für elektrische Installation verlassen werden.

Hierin ist ein weiterer Teil dieser Ausbildung des Montageeinsatzes als Installationsdose 31 zu sehen. Es wird damit erstmals die Möglichkeit geschaffen, trotz Einhaltung des durch VDE vorgegebenen Maximaldurchmessers eine zusätzliche Auflagefläche zwischen Installationsdose 31 und Hohlwand 43 herzustellen. Mit diesen Maßnahmen wird daher der Vorteil erzielt, daß die Spannkräfte zur Anbringung der Installationsdose 31 insbesondere an Hohlwänden 43 zusätzlich verstärkt werden, ohne daß eine Verwendung der Installationsdose bei festem Mauerwerk beeinträchtigt wäre.

Zusätzlich zeigen die Fig.11a,11b eine Weiterbildung, bei welcher der Borstenschlitten 13 auf seiner Unterseite einen nach innen schrägstehenden Einrasthaken 49 aufweist. Dieser Einrasthaken 49 kann in einen entsprechend gestalteten Schlitz 52 am Montageeinsatz 1 einrasten, sobald der Borstenschlitten 13 weit genug in die zugehörige Schlittenführung 14 eingesteckt ist. Es handelt sich um einen relativ elastisch ausgestalteten Einrasthaken 49, der während des Einsteckens des Borstenschlittens 13 in den Montageeinsatz 1 radial nach außen ausweichen kann, solange bis sein am Montageeinsatz 1 anliegendes Ende in den Bereich eines entsprechenden Fangschlitzes 52 am Montageeinsatz 1 gerät. Dann schnappt der Fanghaken 49 zurück und hintergreift praktisch den Montageeinsatz 1 mit seinem innerhalb des Montageeinsatzes angeordneten Ende. Auf diese Weise wird zwischen Borstenschlitten 13 und Schlittenführung 14 eine verliersichere Verbindung geschaffen, die bei Bedarf sogar von innen aufgetrennt werden kann. Hierzu wird z.B. ein Schraubenzieher von innen gegen das freie Ende des Einrasthakens 49 gepreßt und der Einrasthaken auf diese Weise aus dem entsprechenden Fangschlitz 52 des Montageeinsatzes 1 herausgebogen. Danach kann der Montageeinsatz 1 unter Zurücklassung des Borstenschlittens 13 aus dem Wandloch gezogen werden. Dennoch läßt sich der Borstenschlitten 13 anschließend erneut in die zugehörige Schlittenführung 14 einbringen.

Ein weiteres Merkmal dieses Einrasthakens 49 ist, daß er mit seinem wandauswärtsweisenden Ende am Borstenschlitten sitzt, von diesem jedoch über Längsschlitze 53 in Richtung zum wandeinwärtsweisenden Ende des Borstenschlittens getrennt ist (s.Fig.6). Auf diese Weise erfährt der Einrasthaken 49 eine federnd elastische Anlenkung am Borstenschlitten 13 die bereits im Längsbereich des Borstenschlittens 13 dort beginnt, wo die Spitze der zugehörigen Spannschraube 17 hinreicht. Zumindest reicht die Spitze der Spannschraube 17 dann in den Anbringungsbereich des Einrasthakens 49 am Borstenschlitten, wenn der Montageeinsatz zur Montage an Hohlwänden 43 verwendet wird.

Weil bei dieser Montage der Borstenschlitten von innen gegen die Blendplatte 51 der Hohlwand 43 zu ziehen ist, ist davon auszugehen, daß der Borstenschlitten 13 entsprechend weit zum Rand 4 des Montageeinsatzes 1 gezogen werden muß.

Anläßlich dieser Montageart reicht daher die Spitze der Spannschraube 17 entsprechend weit zum unteren Ende des Borstenschlittens 13, in jedem Falle jedoch so weit, daß der einwärts zum Montageeinsatz 1 geneigte Anfangsbereich des Einrasthakens 49 dann von der Spitze der Spannschraube 17 radial nach außen gedrückt wird. Auf diese Weise wird das hakenförmige Ende des Einrasthakens 49 aus der zugeordneten Schlitzöffnung 52 im Montageeinsatz 1 herausgebogen, so daß der Borstenschlitten dann behinderungsfrei weiter in Richtung zum Rand 4 des Montageeinsatzes 1 gespannt werden kann, zumindest so lange bis die Einzelborste 20 auf der Rückseite 42 der Blendplatte 51 der Hohlwand 43 entsprechend abgestützt ist.

Ergänzend sei darauf hingewiesen, daß Montageeinsätze nach dieser Erfindung nicht zwangsläufig kreiszylindrisch sein müssen. Es kommen sämtliche Zylinderarten mit allen nur erdenklichen Grundrissen zur Anwendung, insbesondere sind hierdurch auch Verteilerdosen oder Wandauslaßdosen etc. mit umfaßt.

Das grundsätzliche Prinzip der Erfindung besteht folglich darin, daß sich der Montageeinsatz bei festem Mauerwerk mit den Borsten in den Rillen des Bohrlochs verkrallt und dann durch die Vorspannung der Borsten im Mauerwerk gehalten wird. Später übernimmt der Gips bzw. Mörtel die Verbindung zum Mauerwerk. Gleichzeitig eignet sich dieser Montageeinsatz auch für die Hohlwandmontage, indem er in die deutlich kleineren Lochdurchmesser in Blendplatten von Hohlwänden hindurchsteckbar ist, so daß sein Rand 4 eine von außen wirksame Auflagefläche auf der Hohlwand bietet. Jede einsteckendig voranstehende Borste wird dabei infolge ihrer Elastizität unter Berücksichtigung der Werkstoffparameter seitlich neben ihre einsteckendig jeweils nachfolgende Borste gedrückt. Dabei kann zwar Kontaktberührung zwischen den Einzelborsten stattfinden. Die Kontaktberührung muß jedoch nach dieser Erfindung zu einem seitlichen Abgleiten der aufeinanderliegenden Borsten führen, so daß während des Durchsteckens daher trotzdem eine seitlich benachbarte Ablage der Borsten auf dem Montageeinsatz erfolgt.

### Bezugszeichenliste:

- 1: Montageeinsatz
- 2: Wand
- 3: Boden
- 4: Rand
- 5: Einsteckende
- 6: wandauswärtsweisendes Ende
- 7: Einsteckrichtung
- 8: Wandloch
- 9: Borste
- 10: Borstendicke
- 11: Umfangsrichtung
- 12: Zylindermantellinie
- 13: Borstenschlitten
- 14: Schlittenführung
- 15: Durchsteckloch
- 16: Gewindebohrung
- 17: Spannschraube
- 18: Nenndurchmesser
- 19: Kerndurchmesser
- 20: Einzelborste
- 21: Unterseite
- 22: Spannrichtung
- 23: Führungsfläche
- 24: Randabstand
- 25: Schlittenlängsachse
- 26: Einsteckverbinder
- 27: Fortsätze
- 28: abgewinkelter Rand
- 29: eingeschlossene Wand
- 30: Winkel
- 31: Installationsdose
- 36: rohrförmiges Teil
- 37: Längsanschlag
- 40: Komponente in Umfangsrichtung
- 41: Trennschlitz
- 42: Rückseite der Blendplatte
- 43: Hohlwand
- 44: langer Randabstand
- 45: kurzer Randabstand
- 46: Durchbruch
- 47: Verschlußplatte
- 48: Verbindungssteg
- 49: Einrasthaken
- 50: Mauerwerk
- 51: Blendplatte
- 52: Fangschlitz
- 53: Längsschlitz

## Patentansprüche

1. Zylindrischer Montageeinsatz (1) zum Einstecken in ein Wandloch (8) mit mindestens zwei außen angeordneten und mit einer Komponente (40) entgegen der Einsteckrichtung (7) widerhakenartig abstehenden elastischen Borsten (9), die in Einsteckrichtung (7) hintereinander gestaffelt und mit geringem Abstand benachbart sind und die beim Einstecken in das Wandloch (8) radial zur Wand (2) des Montageeinsatzes (1) gedrückt werden, **dadurch gekennzeichnet**, daß die Borsten (9) auch in Umfangsrichtung (11) gestaffelt sind, derart, daß unter Berücksichtigung der Elastizität des Borstenmaterials die einsteckendig (5) voranstehenden Borsten (9) durch die radiale Zusammendrückung beim Einstecken des Montageeinsatzes (1) in das Wandloch (8), ohne sich gegenseitig zu behindern, neben die einsteckendig (5) nachfolgenden Borsten (9) zur Wand (2) des Montageeinsatzes (1) gedrückt werden.

2. Montageeinsatz (1) nach Anspruch 1, **dadurch gekennzeichnet**, daß die Borsten (9) derart in Umfangsrichtung (11) gestaffelt sind, daß sie entlang unterschiedlicher Zylindermantellinien (12) gerade verlaufen und in Umfangsrichtung (11) wenigstens um einen derartigen Anteil der Borstendicke (10) voneinander beabstandet sind, daß sie beim Andrücken aneinander abgleiten.

3. Zylindrischer Montageeinsatz (1) zum Einstecken in ein Wandloch (8) mit mindestens zwei außen angeordneten und mit einer Komponente (40) entgegen der Einsteckrichtung (7) der hakenartig abstehenden elastischen Borsten (9), die in Einsteckrichtung (7) hinter einander gestaffelt und mit geringem Abstand benachbart sind und die beim Einstecken in das Wandloch (8) radial zur Wand (2) des Montageeinsatzes (1) gedrückt werden, **dadurch gekennzeichnet**, daß die Borsten (9) auch mit einer Komponente (40) in Umfangsrichtung (11) abstehen, derart, daß unter Berücksichtigung der Elastizität des Borstenmaterials die einsteckendig (5) voranstehenden Borsten (9) durch die radiale Zusammdrückung beim Einstecken des Montageeinsatzes in das Wandloch (8) behinderungsfrei neben die einsteckendig (5) nachfolgenden Borsten (9) zur Wand (2) des Montageeinsatzes (1) gedrückt werden.

4. Montageeinsatz (1) nach einem der Ansprüche 1 bis 3, **dadurch gekennzeichnet**, daß die Borsten (9) auf einem Borstenschlitten (13) sitzen, der an dem Montageeinsatz (1) in einer Schlittenführung (14) verschieblich geführt und entgegen der Einsteckrichtung (7) verspannbar ist.

5. Montageeinsatz (1) nach Anspruch 4, **dadurch gekennzeichnet**, daß der Montageeinsatz (1) einen wandauswärtsweisenden Rand (4) mit Durchsteckloch (15) aufweist und daß die Schlittenführung (14) axial hinter dem Durchsteckloch (15) angeordnet ist, wobei der Borstenschlitten (13) eine mit dem Durchsteckloch (15) fluchtende Gewindebohrung (16) für eine Spannschraube (17) aufweist.

6. Montageeinsatz (1) nach Anspruch 5, **dadurch gekennzeichnet**, daß der Nenndurchmesser (18) der Spannschraube (17) kleiner oder gleich dem Kerndurchmesser (19) eines 3,2 mm Gewindes ist (z.B. 2,8 mm).

7. Montageeinsatz (1) nach Anspruch 6, **dadurch gekennzeichnet**, daß wandauswärtsseitig am Borstenschlitten (13) eine Einzelborste (20) sitzt, deren Borstenspitze kurz unterhalb des Randes (4) des Montageeinsatzes (1) endet.

8. Montageeinsatz (1) nach Anspruch 7, **dadurch gekennzeichnet**, daß die Einzelborste (20) mit ihrer Unterseite (21) gegen eine in Spannrichtung (22) keilförmig zunehmende Führungsfläche (23) (=Aufweitungskeil) am Montageeinsatz (1) aufliegt, welche die Einzelborste (20) beim Verspannen entgegen der Einsteckrichtung (7) radial aufspreizt.

9. Montageeinsatz (1) nach Anspruch 8, **dadurch gekennzeichnet**, daß am Umfang des Montageeinsatzes (1) mehrere Aufweitungskeile (23) verteilt sitzen, vorzugsweise mit gleichmäßigen Winkelabständen, vorzugsweise jeweils um 90° beabstandet, und daß jeweils zwei zueinander diametrale Aufweitungskeile (23) vorgesehen sind, die mit ihren Spitzen auf gleichem Randabstand (24) zum Montageeinsatz (1) liegen, und daß die Aufweitungskeile paarweise gleichlang sind.

10. Montageeinsatz (1) nach einem der Ansprüche 4 bis 9, **dadurch gekennzeichnet**, daß an mehreren umfangsverteilten Borstenschlitten (13) mehrere Borstenreihen derart angeordnet sind, daß sich eine umfangsmäßige Drei-Punkt-Auflage im Mauerwerk bildet.

11. Montageeinsatz (1) nach einem der Ansprüche 4 bis 10, **dadurch gekennzeichnet**, daß an dem Montageeinsatz (1) zumindest zwei, - vorzugsweise zwei diametral gegenüberliegende -, Schlittenführungen (14) angebracht sind, vorzugsweise vier jeweils um 90° beabstandete Schlittenführungen (14) oder daß zwischen den Schlittenführungen gleiche Winkelabstände vorliegen.

12. Montageeinsatz (1) nach Anspruch 11, **dadurch gekennzeichnet**, daß die Schlittenführungen (14) auch zur Aufnahme von Einsteckverbindern (26) mit korrespondierenden Führungsquerschnitten dienen, und daß jede Schlittenführung (14) zusätzlich einen Längsanschlag (37) für den Einsteckverbinder (26) aufweist, der für alle Schlittenführungen (14) auf gleichem Randabstand (24) liegt.

13. Montageeinsatz (1) nach Anspruch 12, **dadurch gekennzeichnet**, daß zwischen Einsteckverbinder (26) und Schlittenführung (14) eine Klemmpassung oder Arretierung in Endstellung vorgesehen ist.

14. Montageeinsatz (1) nach einem der Ansprüche 1 bis 13, **dadurch gekennzeichnet**, daß der Montageeinsatz (1) einen umlaufenden Rand (4) aufweist, der am Umfang zumindest segmentweise zur Wandseite abgewinkelt (28) verläuft, und daß der abgewinkelte Bereich (28) mit der eingeschlossenen Wand (29) einen Winkel (30) kleiner als 90° bildet.

15. Montageeinsatz (1) nach einem der Ansprüche 1 bis 14, **dadurch gekennzeichnet**, daß der Montageeinsatz (1) in seinen Hauptabmessungen als Installationsdose (31) für Mauerwerks- oder Hohlwandmontage von elektrischer Installation ausgebildet ist.

16. Montageeinsatz (1) nach einem der Ansprüche 1 bis 15, **dadurch gekennzeichnet**, daß die Schlittenführung (14) als Schwalbenschwanzpaarung zwischen Borstenschlitten (13) und Zylinderwandung (2) ausgebildet ist.

17. Montageeinsatz (1) nach einem der Ansprüche 1 bis 15, **dadurch gekennzeichnet**, daß die Schlittenführung (14) als hintergreifende Nut-Längsleisten-Paarung zwischen Borstenschlitten (13) und Zylinderwandung (2) ausgebildet ist.

18. Montageeinsatz (1) nach Anspruch 1 in Verbindung mit Anspruch 3.

19. Montageeinsatz (1) nach Anspruch 18 in Verbindung mit einem der Ansprüche 2,4 bis 17.
